# EUROPÄISCHE PATENTANMELDUNG

(11) **EP 0 788 988 A2**
(43) Veröffentlichungstag der Anmeldung: **13.08.1997**
(21) Anmeldenummer: 97101904.7
(22) Anmeldetag: 06.02.1997
(51) Int. Cl.: B65G 57/11

(54) **Vorrichtung zum Abstapeln von Paketen**

(30) Priorität: 08.02.1996 DE 29602193 U
(71) Anmelder: Hunkeler Deutschland GmbH, 82024 Taufkirchen (DE)
(72) Erfinder: Wolf, Korbinian, 86984 Prien (DE); Müller, Hermann, 82538 Geretsried (DE)
(74) Vertreter: Schulz, Rütger, Dr. Dipl.-Phys.

(57) **Zusammenfassung**

Eine Vorrichtung zum Abstapeln von Paketen, insbesondere von Paketen aus aufgeschichteten Papierbögen oder dergleichen, weist einen Fördertisch auf, der von einem Förderband angelieferte Pakete übernimmt und sie zu einer Aufnahmeeinheit transportiert. In der Abgabeposition wird von dem Fördertisch das abzustapelnde Paket so relativ zu ihm bewegt, daß bei gleichzeitigem Herausfahren des Fördertisches aus der Abgabeposition die Position des Paketes relativ zur Abgabeposition sich nicht ändert.

## Beschreibung

Die Erfindung betrifft eine Vorrichtung zum Abstapeln von Paketen, wie sie im Oberbegriff des Schutzanspruches 1 näher angegeben ist. Abstapelgeräte dieser Art sind bekannt; sie dienen dazu, einzelne Pakete, die nacheinander von einem Förderband angeliefert werden, aufeinander aufzuschichten.

Wenn Pakete, die aus aufeinander aufgeschichteten Papier- oder Kartonböden bestehen, aufeinander abgestapelt werden sollen, tritt das Problem auf, daß während des Abstapelvorgangs diese Pakete eine möglichst geringe Seitwärtsbewegung ausführen sollen, da sonst die Abstapelposition nicht genau eingehalten werden kann und weiterhin innerhalb eines solchen Paketes die einzelnen Lagen sich gegeneinander verschieben können.

Aufgabe der Erfindung ist somit, ein Abstapelgerät mit einem Fördertisch, der zwischen der Aufnahmeposition und der Abgabeposition hin- und hergefahren wird, so auszugestalten, daß beim Abstapeln des jeweils in die Aufnahmeeinheit übergebende Paket keine Relativbewegung bezüglich der Aufnahmeeinheit ausführt.

Diese Aufgabe wird mit einer Vorrichtung nach dem Oberbegriff des Schutzanspruches 1 gelöst, die erfindungsgemäß die im Kennzeichenteil des Anspruches angegebenen Merkmale aufweist. Vorteilhafte Ausgestaltungen der Erfindung ergeben sich aus den Unteransprüchen.

Im folgenden wird Aufbau und die Arbeitsweise der erfindungsgemäßen Vorrichtung anhand der in den Figuren schematisch dargestellten Arbeitspositionen beschrieben und näher erläutert.
- Fig. 1: zeigt schematisch den Arbeitsablauf der erfindungsgemäßen Vorrichtung
- Fig. 2: zeigt schematisch die in der Höhe verstellbare Aufnahmeeinheit

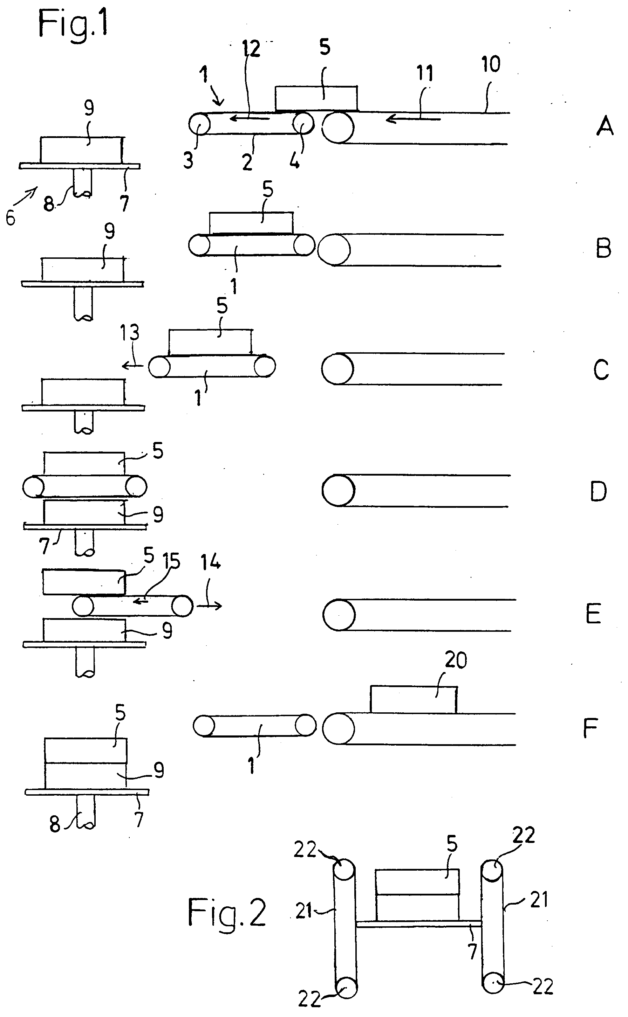

Die Abstapelvorrichtung besteht aus einem bewegbaren Fördertisch 1, der in horizontaler Richtung zwischen einem Zufuhrband 10 und der Aufnahmeeinheit 6 in horizontaler Richtung verfahrbar ist. Der Fördertisch 1 besteht aus zwei Walzen 3 und 4, über die ein Förderband 2 gespannt ist. Anstelle eines Förderbandes kann auch eine Anordnung aus mehreren parallel laufenden schmalen Bändern dienen. Eine der Walzen 3, 4 ist mit einem Antriebsmotor verbunden. Die Aufnahmeeinheit besteht aus einer Ablagefläche 7, die in vertikaler Richtung verstellbar ist; im dargestellten Beispiel ist die Platte 7 an z. B. einer Kolbenstange 8 befestigt, die hydraulisch auf- und abbewegt werden kann. Vorzugsweise wird eine Anordnung verwendet, bei der die als Gabel ausgestaltete Ablagefläche mit ihren Seiten an vertikal ausgerichteten Ketten 21 befestigt sind. Diese Ketten 21 laufen über Zahnräder 22 und werden mit diesen angetrieben, so daß die Ablagefläche 7 auf- und abwärts bewegt werden kann (Fig. 2). In der Position a) der Figur befindet sich auf der Aufnahmeplatte 7 bereits ein Paket 9, das in dem vorhergehenden Arbeitsgang abgelegt worden ist. Entsprechend dem Teilbild A wird von dem Förderband 10 ein darauf befindliches Paket 5 in Pfeilrichtung bewegt und auf den Fördertisch 1 aufgeschoben. Der Fördertisch 1 besteht aus zwei Walzen 3, 4, von denen eine mit einem Motor verbunden ist. Über die Walzen 3, 4 ist das Förderband 2 gelegt. Während der Übernahme des Paketes 5 wird das Förderband 2 in Richtung des Pfeiles 12 bewegt, bis das Paket 5 mittig auf dem Tisch 1 liegt (Teilbild B). Anschließend wird der Tisch 1 mit dem darauf befindlichen Paket 5 in Richtung des Pfeiles 13 zu der Aufnahmeeinheit 6 verfahren (Teilbild C). Der Tisch 1 wird in einer Position angehalten, in der sich das Paket 5 genau über dem auf der Platte 7 befindlichen, im vorherigen Gang übernommenen Paket 9 liegt.

Im nächsten Arbeitsschritt fährt der Tisch 1 in Richtung des Pfeiles zurück zur Aufnahmeposition. Gleichzeitig wird das Förderband 2 des Tisches in Richtung des Pfeiles 15 bewegt, so daß das Paket 5 bei der Bewegung des Tisches in Richtung des Pfeiles 14 seine Position relativ zu der Aufnahmeeinheit 6 beibehält und somit auf das darunter befindliche Paket 9 ausgerichtet bleibt. Bei diesem Vorgang wird das Paket 5 auf dem Paket 9 abgelegt, und die Platte 7 wird mit Hilfe der Ketten 21 oder einer Kolben-Zylindervorrichtung um die Höhe des zuletzt abgelegten Paketes 5 nach unten verfahren. Der Tisch 1 ist dabei wieder in seine Ausgangsposition zurückgelangt und kann das nächste, auf dem Förderband 10 angelieferte Paket 20 übernehmen. Dieses wird dann mit dem Tisch 1 zu der Aufnahmeeinheit transportiert und wie beschrieben dort abgelegt.

Die Fördervorrichtung des Fördertisches 1 kann anstelle von Förderbändern auch aus einer Reihe von angetriebenen Walzen oder Rollen bestehen, mit denen das auf ihm befindliche Paket in Richtung auf die Aufnahmeeinheit bewegt werden kann. Die Aufnameplatte 7 kann statt mit Ketten oder einer Kolbenzylindervorrichtung auch mit einem Spindeltrieb in der Höhe verstellt werden.

## Patentansprüche

1. Vorrichtung zum Abstapeln von Paketen, insbesondere zu Paketen aufgeschichteten Bögen aus Papier, Pappe oder dergleichen, mit einem eine Fördervorrichtung aufweisenden Fördertisch, der die angelieferten Pakete übernimmt und sie zu einer Aufnahmeeinheit transportiert,
**dadurch gekennzeichnet**, **daß**
der Fördertisch (1) zwischen einer Aufnahmeposition und einer an der Aufnahmeeinheit (6) gelegenen Abgabeposition verfahrbar ist, daß er ein ankommendes Paket (5) mit der Fördervorrichtung (2-4) weiterbewegt bis es auf ihm aufliegt, daß er sodann zu der Abgabeposition fährt, wobei das Paket (5) relativ zu dem Fördertisch (1) in Ruhe ist, daß der Fördertisch (1) nach Erreichen der Abgabeposition zu der Aufnahmepostion zurückfährt und gleichzeitig mit der Fördervorrichtung (2-4) das auf ihm liegende Paket (5) entgegen seiner Verfahrrichtung so bewegt, daß es in der Abgabeposition bleibt und dort abgestapelt wird.

2. Vorrichtung nach Anspruch 1,
**dadurch gekennzeichnet**, **daß**
die Fördervorrichtung des Fördertisches (1) ein Förderband (2) aufweist.

3. Vorrichtung nach Anspruch 2,
**dadurch gekennzeichnet**, **daß**
das Förderband (2) aus mehereren nebeneinander mit Abstand angeordneten Bändern gebildet ist.

4. Vorrichtung nach Anspruch 1,
**dadurch gekennzeichnet**, **daß**
die Fördervorrichtung des Fördertisches (1) antreibbare Walzen oder Rollen aufweist.

5. Vorrichtung nach einem der Ansprü+che 1 bis 4,
**dadurch gekennzeichnet**, **daß**
die Aufnahemeinheit (6) eine in senkrechter Richtung verfahrbare Auflageplattform (7) aufweist, die nach dem Abstapeln eines Paketes (5) um dessen Höhe abwärts bewegt wird.
